(19) Europäisches Patentamt / European Patent Office / Office européen des brevets

(11) **EP 4 201 899 A1**

(12) **EUROPEAN PATENT APPLICATION**

(43) Date of publication:
**28.06.2023 Bulletin 2023/26**

(21) Application number: **22215605.1**

(22) Date of filing: **21.12.2022**

(51) International Patent Classification (IPC):
$C03C\ 4/00^{(2006.01)}$      $C03C\ 12/00^{(2006.01)}$
$C03C\ 3/062^{(2006.01)}$      $C03C\ 3/066^{(2006.01)}$
$C03C\ 3/068^{(2006.01)}$      $C03C\ 3/12^{(2006.01)}$
$C03C\ 3/16^{(2006.01)}$      $C03C\ 3/17^{(2006.01)}$

(52) Cooperative Patent Classification (CPC):
**C03C 4/0035; C03C 3/062; C03C 3/066;
C03C 3/068; C03C 3/125; C03C 3/16; C03C 3/17;
C03C 12/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.12.2021 JP 2021213324**

(71) Applicants:
• **OSAKA UNIVERSITY
Suita-shi
Osaka 565-0871 (JP)**
• **GC Corporation
Sunto-gun, Shizuoka 410-1307 (JP)**

(72) Inventors:
• **IMAZATO, Satoshi
Suita-shi, Osaka, 565-0871 (JP)**
• **KITAGAWA, Haruaki
Suita-shi, Osaka, 565-0871 (JP)**
• **AKIYAMA, Ayaka
Itabashi-ku, Tokyo, 174-8585 (JP)**
• **KONO, Tomoki
Itabashi-ku, Tokyo, 174-8585 (JP)**
• **KATO, Katsuhito
Itabashi-ku, Tokyo, 174-8585 (JP)**

(74) Representative: **Müller-Boré & Partner
Patentanwälte PartG mbB
Friedenheimer Brücke 21
80639 München (DE)**

(54) **GLASS POWDER COMPOSITE, AND METHOD OF PRODUCING GLASS POWDER COMPOSITE**

(57)    A glass powder composite includes a first glass powder, and a second glass powder having a different solubility from that of the first glass powder depending on pH, wherein both the first glass powder and the second glass powder have ion sustained-release properties.

EP 4 201 899 A1

**Description**

CROSS-REFERENCE TO RELATED APPLICATIONS

This patent application is based on and claims priority to Japanese Patent Application No. 2021-213324 filed on December 27, 2021, the entire contents of which are incorporated herein by reference.

TECHNICAL FIELD

The present invention relates to a glass powder composite.

BACKGROUND

Ion sustained-release glass, which releases functional ions gradually, has been known for a long time. For example, inorganic glass particles that release phosphorus and calcium ions into water are used as granular soil modifiers (see Patent Document 1). In addition, a technology to use an antibacterial glass that elutes silver ions, known for its antibacterial effect, in resin molded products (see Patent Document 2) has been known. In addition, applications of bioglass to medical applications are well known, for example, materials for bone repair and techniques for medical implants (see Patent Document 3, Patent Document 4). Furthermore, a technique to use ion sustained-release glass in deodorant compositions has been known (see Patent Document 5).

[Related Art Document]

[Patent Document]

[Patent Document 1] Japanese Patent Laid-Open No. 2000-41482
[Patent Document 2] Japanese Patent No. 6604499
[Patent Document 3] Japanese Patent No. 6622416
[Patent Document 4] Japanese Unexamined Patent Application Publication (Translation of PCT Application) No. 2020-535881
[Patent Document 5] International Publication No. 2019/189851

SUMMARY

Means to solve problems

Conventional ion sustained-release glass, when used in an environment where acidity (pH) is not constant, may not have the ability to release ions gradually when acidity changes.
The present invention is to provide a glass powder composite that releases ions gradually with responsiveness to changes in acidity.

Means to Solve the Problems

The glass powder composite according to one aspect of the present invention includes a first glass powder and a second glass powder having different solubility from that of the first glass powder depending on pH, and both the first glass powder and the second glass powder have ion sustained-release properties.

Effect of the Invention

According to one aspect of the present invention, a glass powder composite can be provided that releases ions gradually with responsiveness to changes in acidity.

DETAILED DESCRIPTION OF EMBODIMENTS

Hereinafter, embodiments of the present invention will be described. The glass powder composite according to the present embodiment includes a first glass powder and a second glass powder having different solubility from that of the first glass powder depending on pH, and both the first glass powder and the second glass powder have ion sustained-release properties.

As used herein, "glass" includes not only amorphous glass but also crystalline glass. Examples of crystalline glass include glass-ceramics that contain glass in part. Glass powder indicates powdered glass. The size of the powder is preferably in a range from 0.02 to 100 um in median diameter, and more preferably in a range from 0.02 to 30 um.

In the present specification, a glass powder composite indicates a composition containing at least two kinds of glass. Glass powders having different solubilities depending on pH indicate different solubilities in water depending on acidity between the first and second glass powders. Ion sustained-release refers to a property of a component contained in a glass powder dissolving and being gradually released in an ionic state.

The component of the first glass powder is not particularly limited. Silicate glass powder is preferably used as the first glass powder. Silicate glass is easier to dissolve in acid (pH 6.5 or less) and easily releases ions gradually than in pH neutral (pH 6.5 to less than 8).

Silicate glass contains silicon (Si) and further contains sodium (Na) and/or potassium (K). Here, silicon plays a role in forming a network structure in glass.

A content of silicon in silicate glass is not particularly limited, but the content of silicon in silicate glass is preferably in a range from 15% by mass to 70% by mass, and even more preferably in a range from 15% by mass to 50% by mass, in terms of the amount converted into silicon oxide ($SiO_2$). When the content of silicon oxide in silicate glass is 15% by mass or more, glass is easily obtained. When the content of silicon oxide in silicate glass is 70% by mass or less, glass can be produced without the melting temperature becoming too high.

The content of sodium and/or potassium in silicate glass is not particularly limited, but is preferably in a range from 0% by mass to 15% by mass, and more preferably in a range from 1% by mass to 10% by mass, in terms of the amount converted into sodium oxide ($Na_2O$) and/or potassium oxide ($K_2O$). When silicate glass contains sodium and/or potassium, the melting temperature of the glass can be lowered and the solubility of the glass can be further enhanced. When the content of sodium oxide and/or potassium oxide in the silicate glass is 15% by mass or less, glass that is not too soluble in water tends to be obtained.

Specific examples of silicate glass include soda-lime glass, aluminosilicate glass, borosilicate glass, lead glass, and the like. Among these, soda-lime glass and aluminosilicate glass are preferably used in terms of high ion sustained-release.

The first glass powder, which is a powder of silicate glass, contains at least one element other than silicon (Si), sodium (Na), and potassium (K). The elements in this glass are those that form ions (Hereafter referred to as ion sustained-release) that are released gradually from the glass.

The elements contained in the first glass powder are not particularly limited but include, for example, Li, Ca, Sr, Ba, Y, La, Ce, Pr, Nd, Pm, Sm, Eu, Gd, Tb, Dy, Ho, Er, Tm, Yb, Lu, Ti, Zr, Ta, Cu, Ag, Zn, B, Al, Ga, Si, Sn, P, F, and the like. One or more kinds of elements are contained in the first glass powder. Among these, Li, Ca, Sr, Cu, Ag, Zn, B, Ga, and F are preferably contained in the first glass powder.

In addition, Ca and Sr are preferably used as the elements contained in the first glass powder for the aspect of ion sustained-release improving acid resistance. Zn is preferably used for the aspect of acid production being suppressed. In addition, Ca, Zn, and F are preferably used for the aspect of the ion sustained-release having a suppressing effect of demineralization on dentin. Ca and Sr are preferably used for the aspect of these elements promoting bone formation. Furthermore, Cu, Ag, Zn, B, Ga, and F are preferably used for the aspect of the ion sustained-release having antibacterial effects. Li is preferably used for the aspect of the ion sustained-release having anti-inflammatory effects.

The content of Li in the first glass powder is not particularly limited, but is preferably in a range from 0% by mass to 10% by mass, and more preferably in a range from 1% by mass to 8% by mass, in terms of the amount converted into lithium oxide ($LiO_2$). When the first glass powder contains Li, an anti-inflammatory effect can be imparted. When the content of Li in the first glass powder is 10% by mass or less, glass that is not too soluble in water tends to be obtained.

The content of Ca contained in the first glass powder is not particularly limited, but is preferably in a range from 0% by mass to 40% by mass, and more preferably in a range from 1% by mass to 35% by mass, in terms of the amount converted into calcium oxide (CaO). When the first glass powder contains Ca, an acid resistance effect, a suppressing effect of demineralization on dentin, and a bone formation promoting effect can be imparted. When the content of Ca in the first glass powder is 40% by mass or less, glass is easily obtained.

The content of Sr contained in the first glass powder is not particularly limited, but is preferably in a range from 0% by mass to 40% by mass, and more preferably in a range from 1% by mass to 35% by mass, in terms of the amount converted into strontium oxide (SrO). When the first glass powder contains Sr, the acid resistance effect and the bone formation promoting effect can be imparted. When the content of Sr in the first glass powder is 40% by mass or less, the melting temperature of the glass does not become too high, and the glass is easily obtained.

The content of Cu in the first glass powder is not particularly limited, but is preferably in a range from 0% by mass to 10% by mass, and more preferably in a range from 0.1% by mass to 5% by mass, in terms of the amount converted into copper oxide (CuO). When the first glass powder contains Cu, the antibacterial effect can be imparted.

When the content of Cu in the first glass powder is 10% or less, the glass is easily obtained.

The content of Ag in the first glass powder is not particularly limited but is preferably in a range from 0% by mass to 5% by mass, and more preferably in a range from 0.1% by mass to 3% by mass, in terms of the amount converted into silver oxide ($Ag_2O$). When the first glass powder contains Ag, antibacterial effect can be imparted. When the content of Ag in the first glass powder is 5% by mass or less, glass is easily obtained.

The content of Zn in the first glass powder is not particularly limited, but is preferably in a range from 0% by mass to 40% by mass, and more preferably in a range from 1% by mass to 35% by mass, in terms of the amount converted into zinc oxide (ZnO). When the first glass powder contains Zn, a suppressing effect of acid production, a suppressing effect of demineralization on dentin, and antibacterial effect on dentin can be imparted. When the content of Zn is 40% by mass or less, glass is easily obtained.

The content of B contained in the first glass powder is preferably in a range from 0% by mass to 10% by mass, and more preferably in a range from 1% by mass to 8% by mass, in terms of the amount converted into boron oxide ($B_2O_3$). When the first glass powder contains B, the antibacterial effect can be imparted. When the content of B is 10% by mass or less, the phase separation of glass is suppressed, and glass is stably and easily obtained.

The content of Ga contained in the first glass powder is not particularly limited, but is preferably in a range from 0% by mass to 40% by mass, and more preferably in a range from 1% by mass to 35% by mass, in terms of the amount converted into gallium oxide ($Ga_2O_3$). When the first glass powder contains Ga, the antibacterial effect can be imparted. When the content of Ga is 40% by mass or less, glass is easily obtained.

The content of F contained in the first glass powder is not particularly limited, but is preferably in a range from 0% by mass to 25% by mass, and more preferably in a range from 1% by mass to 22% by mass. When the first glass powder contains F, a suppressing effect of demineralization on dentin and antibacterial effect on dentin can be imparted. When the content of F is 25% by mass or less, glass is easily obtained.

The composition of the second glass powder is not particularly limited. Phosphate glass powder is preferably used as the second glass powder. Phosphate glass powders can be either glass that dissolves more easily and more easily releases ions gradually in acidity (pH 6.5 or less) than in pH neutral (pH 6.5 to less than pH 8), or glass that dissolves more easily and more easily releases ions gradually in pH neutral (pH 6.5 to less than pH 8) than in acidity (pH 6.5 or less).

Phosphate glass contains phosphoric acid ($P_2O_5$) and sodium (Na) and/or potassium (K). Here, phosphoric acid plays a role in formation of network structure in glass.

The content of phosphoric acid in the phosphate glass is not particularly limited, but is preferably in a range from 40% by mass to 80% by mass, and more preferably in a range from 40% by mass to 70% by mass. When the content of phosphoric acid in phosphate glass is 40% by mass or more, glass tends to be easily obtained. When the content of phosphoric acid in phosphate glass is 80% by mass or less, a production of glass that is not too soluble in water can be achieved.

The content of sodium and/or potassium in the phosphate glass is not particularly limited but is preferably in a range from 5% by mass to 30% by mass, and more preferably in a range from 5% by mass to 20% by mass, in terms of the amount converted into sodium oxide ($Na_2O$) and potassium oxide ($K_2O$). When the content of sodium and/or potassium in the phosphate glass is 5% by mass or more, the melting temperature of the glass can be lowered and the solubility of the glass can be further enhanced. When the content of sodium and/or potassium in the phosphate glass is 30% by mass or less, the glass that is not too soluble in water can be easily obtained.

The second glass powder, which is the phosphate glass powder, contains at least one element other than phosphorus (P), sodium (Na), and potassium (K). The elements contained in the glass powder are those that enable to release ion gradually.

The elements contained in the second glass powder are not particularly limited but include, for example, Li, Ca, Sr, Ba, Y, La, Ce, Pr, Nd, Pm, Sm, Eu, Gd, Tb, Dy, Ho, Er, Tm, Yb, Lu, Ti, Zr, Ta, Cu, Ag, Zn, B, Al, Ga, Si, Sn, P, F, and the like. One or more of these elements may be contained in the second glass powder. Among these, Li, Ca, Sr, Cu, Ag, Zn, B, Ga and F are preferably used.

In addition, Ca and Sr are preferably used as the elements contained in the second glass powder for the aspect of ion sustained-release improves acid resistance. Zn is preferably used for the aspect of acid production is suppressed. In addition, Ca, Zn, and F are preferably used for the aspect of the ion sustained-release has a suppressing effect of demineralization on dentin, and Ca and Sr are preferably used for the aspect of these elements promote bone formation. Furthermore, Cu, Ag, Zn, B, Ga, and F are preferably used for the aspect of the ion sustained-release has antibacterial effects, and Li is preferably used for the aspect of the ion sustained-release has anti-inflammatory effects.

The content of Li in the second glass powder is not particularly limited, but is preferably in a range from 0% by mass to 20% by mass, and more preferably in a range from 1% by mass to 15% by mass, in terms of the amount converted into lithium oxide ($LiO_2$). When the second glass powder contains Li, an anti-inflammatory effect can be imparted. When the content of Li is 20% by mass or less, glass that is not too soluble in water tends to be easily obtained.

The content of Ca contained in the second glass powder is not particularly limited but is preferably in a range from 0% by mass to 40% by mass, and more preferably in a range from 1% by mass to 35% by mass, in terms of the amount converted into calcium oxide (CaO). When the second glass powder contains Ca, acid resistance, a suppressing effect of demineralization on dentin, and a bone formation promoting effect can be imparted. When the content of Ca in the second glass powder is 40% by mass or less, glass tends to be easily obtained.

The content of Sr contained in the second glass powder is not particularly limited, but is preferably in a range from 0% by mass to 40% by mass, and more preferably in a range from 1% by mass to 35% by mass, in terms of the amount converted into strontium oxide (SrO). When the second glass powder contains Sr, acid resistance and a bone formation promoting effect can be imparted. When the content of Sr in the second glass powder is 40% by mass or less, the melting temperature of the glass does not become too high, and glass is easily obtained.

The content of Cu in the second glass powder is not particularly limited, but is preferably in a range from 0% by mass to 10% by mass, and more preferably in a range from 0.1% by mass to 5% by mass, in terms of the amount converted into copper oxide (CuO). When the second glass powder contains Cu, the antibacterial effect can be imparted. When the content of Cu in the second glass powder is 10% by mass or less, glass is easily obtained.

The content of Ag in the second glass powder is not particularly limited, but is preferably in a range from 0% by mass to 5% by mass, and more preferably in a range from 0.1% by mass to 3% by mass, in terms of silver oxide ($Ag_2O$). When the second glass powder contains Ag, the antibacterial effect can be imparted. When the content of Ag in the second glass powder is 5% by mass or less, glass is easily obtained.

The content of Zn in the second glass powder is not particularly limited, but is preferably in a range from 0% by mass to 20% by mass, and more preferably in a range from 1% by mass to 15% by mass, in terms of the amount converted into zinc oxide (ZnO). When the second glass powder contains Zn, a suppressing effect of acid production, a suppressing effect of demineralization on dentin, and an antibacterial effect on dentin can be imparted. When the content of Zn in the second glass powder is 20% by mass or less, glass is easily obtained.

The content of B contained in the second glass powder is not particularly limited, but is preferably in a range from 0% by mass to 10% by mass, and more preferably in a range from 1% by mass to 8% by mass, in terms of the amount converted into boron oxide ($B_2O_3$). When the second glass powder contains B, the antibacterial effect can be imparted. When the content of B in the second glass powder is 10% by mass or less, the phase separation of glass is suppressed, and the glass is stably and easily obtained.

The content of Ga contained in the second glass powder is not particularly limited, but is preferably in a range from 0% by mass to 25% by mass, and more preferably in a range from 1% by mass to 20% by mass, in terms of the amount converted into gallium oxide ($Ga_2O_3$). When the second glass powder contains Ga, the antibacterial effect can be imparted. When the content of Ga in the second glass powder is 25% by mass or less, the glass is easily obtained.

The content of F contained in the second glass powder is not particularly limited, but is preferably in a range from 0% by mass to 20% by mass, and more preferably in a range from 1% by mass to 15% by mass. When the second glass powder contains F, a suppressing effect of demineralization on dentin and an antibacterial effect on dentin can be imparted. When the content of F in the second glass powder is 20% by mass or less, glass is easily obtained.

A mass ratio of the first glass powder to the second glass powder formulated in the glass powder composite is not particularly limited, but is, for example, 10:1 to 1:10, preferably 7:1 to 1:7, and more preferably 5:1 to 1:5.

In the glass powder composite of the present embodiment, at least one of the elements contained in the first glass powder may be identical to at least one of the elements contained in the second glass powder. For example, if the first glass powder contains zinc (Zn), the second glass powder also contains zinc (Zn).

In the glass powder composite of the present embodiment, at least one element contained in the first glass powder may be different from the element contained in the second glass powder, and at least one element contained in the second glass powder may be different from the element contained in the first glass powder. For example, if the first glass powder contains zinc (Zn), the second glass powder does not contain zinc (Zn).

In the glass powder composite of the present embodiment, the dissolution rate of the second glass powder in the neutral pH range is preferably greater than the dissolution rate of the second glass powder in the acidic range. As used herein, the neutral pH zone indicates a range above pH 6.5 and below 8, and the acidic pH range indicates a range below pH 6.5.

The dissolution rate is calculated by dissolving the glass in an acetic acid-sodium acetate buffer according to the following formula.

```
Dissolution rate (%) = [(weight before immersing in the
buffer) - (weight after immersing in the buffer)] × 100
/ weight before immersing in a solution
```

In the present embodiment, as described above, the first glass powder and the second glass powder having different solubility depending on pH are contained in the composite, and the sustained-release amount of ions can be changed according to the change in acidity by having ion sustained-release in both the first glass powder and the second glass powder. When the mass ratio of the first glass powder to the second glass powder to be mixed into the glass powder composite is 10:1 to 1:10, the change in the sustained-release amount of ions can be controlled according to the change in acidity.

In the present embodiment, the effect of changing the sustained-release amount of ions according to the change in acidity is remarkably obtained by using silicate glass powder in the first glass powder and phosphate glass powder in the second glass powder.

In the present embodiment, as described above, both the first and second glass powders contain at least one element selected from Li, Ca, Sr, Cu, Ag, Zn, B, Ga, and F. Thus, in the present embodiment, in the case of Li, the ion sustained-release can exert anti-inflammatory effects. In the case of Ca, the suppressing effect of demineralization on dentin can be obtained, acid resistance can be improved, and bone formation can be promoted. In the case of Sr, acid resistance can be improved, and bone formation can be promoted.

In addition, in the present embodiment, in the case of Cu and Ag, the antibacterial effect can be obtained, and in the case of Zn, the antibacterial effect, the suppressing effect of acid production, and the suppressing effect of demineralization on dentin can be imparted to the glass powder composite. In the case of B and Ga, the antibacterial effect is obtained, and in the case of F, the antibacterial effect and the suppressing effect of demineralization on the dentin are obtained.

In the present embodiment, as described above, at least one of the elements contained in the first glass powder is identical to at least one of the elements contained in the second glass powder, so that the same ion sustained-release can be sustained even when the acidity is changed, and the sustained-release amount of ion can be maintained.

For example, if both the first glass powder and the second glass powder contain zinc (Zn), the sustained-release amount of zinc ion ($Zn^{2+}$) is maintained, increased, or decreased even if the environment of the sustained-release of zinc ion ($Zn^{2+}$) is changed from an acidic pH to a neutral pH region.

In the present embodiment, as described above, at least one of the elements contained in the first glass powder is different from the elements contained in the second glass powder, and at least one of the elements contained in the second glass powder is different from the elements contained in the first glass powder, so that ion sustained-release can differ between the powders according to the change in acidity.

In the glass powder composite of the present embodiment, as described above, the dissolution rate of the second glass powder in the neutral pH region is larger than the dissolution rate of the second glass powder in the acidic region. Thus, in the present embodiment, even when the dissolution rate of the first glass powder in the neutral pH region is smaller than the dissolution rate of the first glass powder in the acidic region, the amount of sustained-release ions sustained-release can be maintained even when the acidity changes from acidic pH to neutral pH because of the ion sustained-release from the second glass powder in the neutral pH region.

The application of the glass powder composite of the present embodiment is not particularly limited. Examples include resins, paint films, and soil modifiers that exhibit antibacterial properties with responsiveness to changes in the acidity of the external environment (areas touched by hands, rain, dirt, or the like). Furthermore, examples include bone replacement materials that adapt to bone destruction or bone formation where changes in acidity occur, and dental materials that adapt to changes in acidity in the oral cavity.

As an example of the application of the glass powder composite, a dental composition in the case of using the glass powder composite of the present embodiment in dental materials will be described. The dental composition according to the present embodiment contains the aforementioned glass powder composite. In the present specification, a dental composition refers to a composition used in dental materials. The dental composition of the present embodiment may contain other components other than the glass powder composite mentioned above.

In the dental composition of the present embodiment, the effect of the glass powder composite can be obtained as it is by containing the glass powder composite. That is, since the glass powder composite contained in the dental composition contains the first glass powder and the second glass powder having different solubility from that of the first glass powder depending on pH, and both the first glass powder and the second glass powder are glass powder composites with ion sustained-release, the ion sustained-release can be changed according to the change in acidity in the oral cavity.

For example, a dental composition contains a glass powder composite in which the first glass powder is a powder of silicate glass that gradually releases zinc ion ($Zn^{2+}$) and the second glass powder is a powder of phosphate glass that gradually releases zinc ion ($Zn^{2+}$). In this case, the amount of ion sustained-release released from the dental composition can be maintained or controlled with responsiveness to changes in oral acidity.

Specifically, in the dental composition, zinc ion ($Zn^{2+}$) is more likely to be gradually released from the first glass powder of the glass powder composite when the acidity in the oral cavity is acidic pH (for example, pH 4.5), while zinc ion ($Zn^{2+}$) is less likely to be gradually released when the pH in the oral cavity is neutral pH (for example, pH 7.5). In contrast, zinc ion ($Zn^{2+}$) is more likely to be gradually released from the second glass powder in both acidic pH in the oral cavity (for example, pH 4.5) and neutral pH (for example, pH 7.5) in the oral cavity.

As a result, whether the acidity in the oral cavity is acidic or neutral, zinc ion ($Zn^{2+}$) is released as sustained-release ions from the dental composition to maintain the sustained-release of ions sustained-release in the oral cavity. Therefore, even if the acidity in the oral cavity changes, the antibacterial effect of zinc ion ($Zn^{2+}$), the suppressing effect of acid production and the suppressing effect of demineralization on dentin can be maintained in the oral cavity.

Other components other than the glass powder composite contained in the composition of the present embodiment are not particularly limited, but for example, polymers such as polyacrylic acid can be contained. The dental composition can constitute an ionomer cement by mixing such a glass powder composite with a polymer such as polyacrylic acid.

It should be noted that the dental composition of the present embodiment may contain other optional components, as necessary, curing accelerators such as hydrochlorides, sulfates, and the like; oily components such as hydrocarbons, higher fatty acids, esters, and the like; various inorganic or organic colorants; antibacterial agents; perfumes; and the like, as long as these components do not impair the purpose of the present invention.

The dental composition of the present embodiment can be used for various dental materials. Applications of the dental composition of the present embodiment are not particularly limited, but include, for example, dental cement, dental adhesive, dental temporary sealing material, dental temporary fixing material, dental primer, dental coating material, root surface covering material, dental composite resin, dental hard resin, resin material for dental cutting, dental temporary restorative material, dental filler, pulp capping material, denture base material, artificial teeth, toothpaste, and the like.

A method of producing the glass powder composite according to the present embodiment is a method of substantially producing the glass powder composite described above. Specifically, the process involves mixing the first glass powder and the second glass powder having different solubility from that of the first glass powder depending on pH, and both the first glass powder and the second glass powder have ion sustained-release properties.

In the process of mixing the first glass powder and the second glass powder in the method of producing of the glass powder composite according to the present embodiment, the first glass powder and the second glass powder contained in the glass powder composite are used. Therefore, the glass powder composite obtained by the production method according to the present embodiment can obtain the effect of the glass powder composite as it is described above.

That is, the resulting glass powder composite contains the first glass powder and the second glass powder having different solubility from that of the first glass powder depending on pH, and both the first glass powder and the second glass powder are glass powder composites with ion sustained-release. Therefore, by the production method according to the present embodiment, it is possible to obtain the glass powder composite in which the amount of ion sustained-release can be changed according to the changes in acidity.

EXAMPLES

The present invention will be described below with further examples. Various tests and evaluations are conducted according to the following methods.

<Silicate Glass>

The raw material of silicate glass was weighed, mixed in a mortar for 10 minutes, placed in a platinum crucible, melted at 1350°C for 1 hour, and the melt was water-cooled to vitrify. The resulting glass was collected, dried at 110°C for 5 hours and ground in a planetary mill (15 mm alumina ball, 150 rpm) for 30 minutes to 1 hour to obtain glass components S1 to S5. Commercially available quartz glass fillers (hereinafter referred to as QG) were also used.

<Phosphate Glass>

The raw material of the phosphate glass was weighed, mixed in a mortar for 10 minutes, placed in a platinum crucible, melted at 1100°C for 1 hour, and the melt was cooled by iron-pressing. The resulting product was ground by a ball mill for 30 minutes (ethanol wet grinding, 40 mm alumina ball, 100 rpm) and further ground by a ball mill for 30 minutes (ethanol wet grinding, 5 mm alumina ball, 100 rpm). The glass powder was then collected by centrifugation and dried under reduced pressure (-0.1 MPa, 40°C) to evaporate the remaining ethanol to obtain glass components P1, P2, PA1, and PA2.

<Glass Composition>

Using X-ray fluorescence analysis device (ZSX Primus IV, manufactured by Rigaku), the glass powder (formed with PVC billing) was analyzed to determine the composition of the glass powder. Tables 1 and 2 indicate the evaluation results of the glass powder composition (unit: % by mass).

<Particle Size Distribution>

A laser diffraction/scattering particle size analyzer (Partica LA-960 V2, manufactured by Horiba Ltd.) was used to measure the silicate glass dispersed in distilled water and to measure the phosphate glass dispersed in ethanol. Both glass powders were confirmed to be D(50): 10±2 um.

<Amount Dissolved (Glass only)>

0.1 g of glass powder was put into a 10 ml of acetic acid-sodium acetate buffer of pH 4.5 and hydroxyethyl piperazine ethanesulfonic acid (HEPES) buffer of pH 7.5, and the mixture was stored at 37°C for one day with stirring at 10 rpm. Then, the residue was filtered through a glass filter paper and the dissolution rate was calculated from the weight of the residue using the following formula.

Dissolution rate (%) = [(weight before immersing in the buffer) - (weight after immersing in the buffer)] $\times$ 100 / weight before immersing in the buffer.

Table 1 indicates the dissolution rate of the silicate glass (Glass components S1 to S5, QG). Table 2 indicates the dissolution rate of the phosphate glass (Glass components P1, P2, PA1, and PA2).

[Table 1]

| Glass components/% by mass | | | S1 | S2 | S3 | S4 | S5 | QG |
|---|---|---|---|---|---|---|---|---|
| $P_2O_5$ | | | | | | 6.2 | 8.2 | |
| $Na_2O$ | | | 6.7 | 6.6 | 6.5 | 5.6 | 9.4 | |
| CaO | | | 9.7 | 3.5 | | 9.8 | 9.0 | |
| $SiO_2$ | | | 38.7 | 24.5 | 24.3 | 24.7 | 24.9 | |
| SrO | | | | | | | | |
| $Al_2O_3$ | | | 7.2 | | | 31.8 | 27.8 | 100 |
| ZnO | | | 34.4 | 30.3 | 35.0 | | | |
| $Ga_2O_3$ | | | | | | | | |
| $La_2O_3$ | | | | 31.8 | 31.2 | | | |
| F | | | 3.3 | 3.3 | 3.0 | 21.9 | 20.7 | |
| pH 4.5 | Dissolution rate (%) | | 11 | 21 | 24 | 12.4 | 4.9 | 0 |
| | Amount of eluted ion (ppm) | $Zn^{2+}$ | 533 | 564 | 567 | - | - | - |
| | | $Ca^{2+}$ | - | - | - | 113 | 57 | - |
| | | $Sr^{2+}$ | - | - | - | - | - | - |
| | | $Ga^{3+}$ | - | - | - | - | - | - |
| | | $F^-$ | 66 | 2 | 2 | 111 | 111 | - |
| pH 7.5 | Dissolution rate (%) | | 5 | 6 | 4 | 4.6 | 4.2 | 0 |
| | Amount of eluted ion (ppm) | $Zn^{2+}$ | 8 | 10 | 10 | - | - | - |
| | | $Ca^{2+}$ | - | - | - | 10 | 11 | - |
| | | $Sr^{2+}$ | - | - | - | - | - | - |
| | | $Ga^{3+}$ | - | - | - | - | - | - |
| | | $F^-$ | 7 | 3 | 2 | 12 | 20 | - |

[Table 2]

| Glass components/% by mass | PN1 | PN2 | PA1 | PA2 |
|---|---|---|---|---|
| $P_2O_5$ | 65.1 | 55.7 | 54.8 | 54.6 |

(continued)

| Glass components/% by mass | | | PN1 | PN2 | PA1 | PA2 |
|---|---|---|---|---|---|---|
| Na$_2$O | | | 14.8 | 9.5 | 7.8 | 6.6 |
| CaO | | | | | | |
| SiO$_2$ | | | | | | |
| SrO | | | | 34.8 | 33.9 | 33.3 |
| Al$_2$O$_3$ | | | 3.9 | | 3.5 | 5.5 |
| ZnO | | | | | | |
| Ga$_2$O$_3$ | | | 16.2 | | | |
| La$_2$O$_3$ | | | | | | |
| F | | | | | | |
| pH 4.5 | Dissolution rate (%) | | 29 | 45 | 15 | 17 |
| | Amount of eluted ion (ppm) | Zn$^{2+}$ | - | - | - | - |
| | | Ca$^{2+}$ | - | - | - | - |
| | | Sr$^{2+}$ | - | 958 | 464 | 373 |
| | | Ga$^{3+}$ | 185 | - | - | - |
| | | F$^-$ | - | - | - | - |
| pH 7.5 | Dissolution rate (%) | | 40 | 61 | 5 | 6 |
| | Amount of eluted ion (ppm) | Zn$^{2+}$ | - | - | - | - |
| | | Ca$^{2+}$ | - | - | - | - |
| | | Sr$^{2+}$ | - | 1684 | 66 | 53 |
| | | Ga$^{3+}$ | 427 | - | - | - |
| | | F$^-$ | - | - | - | - |
| | | | Acid<Neutral | Acid<Neutral | Acid>Neutral | Acid>Neutral |

<Amount of Eluted Ions (Glass Only)>

0.1 g of glass powder was put into 10 ml of acetate-sodium acetate buffer of pH 4.5 and HEPES buffer of pH 7.5, and the mixture was stored at 37°C for one day with stirring at 10 rpm. Then, the mixture was centrifuged at 2,000 rpm for 10 minutes, and this was repeated twice. In the solution filtered through a 0.2 um membrane filter, the concentrations of Zn$^{2+}$, Sr$^{2+}$, Ca$^{2+}$, and Ga$^{3+}$ were measured with an inductively coupled plasma optical emission spectrometer (ICP-OES) (iCAP 7200 Duo, manufactured by Thermo Fisher) and the concentration of F- was measured with a fluorine electrode. Table 1 indicates the amount of eluted ion of silicate glass. Table 2 indicates the amount of eluted ion of phosphate glass.

<Amount of Eluted Ion (A Combination of Glass)>

Two kinds of glass powders (in any amount) were put into 10 ml of acetate-sodium acetate buffer of pH 4.5 and HEPES buffer of pH 7.5, and the mixture was stored at 37°C for one day with stirring at 10 rpm. Then, the mixture was centrifuged at 2,000 rpm for 10 minutes, and this was repeated twice. In the solution filtered through a 0.2 um membrane filter, the concentrations of Zn$^{2+}$, Sr$^{2+}$, Ca$^{2+}$, and Ga$^{3+}$ were measured using ICP-OES and the concentration of F- was measured using a fluorine electrode.

Table 3 indicates the components and the amount of eluted ions in Examples 1 to 5. Table 4 indicates the components and the amount of eluted ions in Comparative Examples 1 to 5.

[Table 3]

| | | | Example 1 | Example 2 | Example 3 | Example 4 | Example 5 |
|---|---|---|---|---|---|---|---|
| Components (g) | Silicate glass | S1 | - | 0.1 | - | - | - |
| | | S2 | - | - | 0.1 | - | - |
| | | S3 | 0.1 | - | - | - | - |
| | | S4 | - | - | - | 0.1 | - |
| | | S5 | - | - | - | - | 0.1 |
| | Non-eluted glass | QG | - | - | - | - | - |
| | Phosphate glass | PN1 | 0.5 | 0.1 | - | 0.1 | - |
| | | PN2 | - | - | 0.1 | - | 0.1 |
| | | PA1 | - | - | - | - | - |
| | | PA2 | - | - | - | - | - |
| Amount of eluted ion (ppm) | pH 4.5 | $Zn^{2+}$ | 625 | 431 | 497 | - | - |
| | | $Ca^{2+}$ | - | 95 | 56 | 124 | 33 |
| | | $Sr^{2+}$ | - | - | 40 | - | 81 |
| | | $Ga^{3+}$ | 0 | 1 | - | 0 | - |
| | | $F^{-}$ | 8 | 48 | 2 | 146 | 61 |
| | pH 7.5 | $Zn^{2+}$ | 281 | 66 | 110 | - | - |
| | | $Ca^{2+}$ | - | 13 | 14 | 12 | 9 |
| | | $Sr^{2+}$ | - | - | 525 | - | 1228 |
| | | $Ga^{3+}$ | 166 | 43 | - | 367 | - |
| | | $F^{-}$ | 17 | 14 | 18 | 12 | 14 |

[Table 4]

| Components (g) | | | Comparative Example 1 | Comparative Example 2 | Comparative Example 3 | Comparative Example 4 | Comparative Example 5 |
|---|---|---|---|---|---|---|---|
| Components (g) | Silicate glass | S1 | - | - | - | - | - |
| | | S2 | - | - | - | - | - |
| | | S3 | - | 0.1 | - | - | - |
| | | S4 | - | - | - | - | - |
| | | S5 | - | - | 0.1 | - | - |
| | Non-eluted glass | QG | - | - | - | - | 0.1 |
| | Phosphate glass | PN1 | - | - | - | - | - |
| | | PN2 | 0.1 | - | - | 0.1 | 0.1 |
| | | PA1 | 0.1 | - | 0.1 | - | - |
| | | PA2 | - | 0.9 | - | 0.1 | - |
| Amount of eluted ion (ppm) | pH 4.5 | $Zn^{2+}$ | - | 445 | - | - | - |
| | | $Ca^{2+}$ | - | 225 | 134 | - | - |
| | | $Sr^{2+}$ | 305 | - | 53 | 832 | 950 |
| | | $Ga^{3+}$ | 72 | - | - | - | - |
| | | $F^-$ | - | - | 132 | - | - |
| | pH 7.5 | $Zn^{2+}$ | - | 14 | - | - | - |
| | | $Ca^{2+}$ | - | 33 | 66 | - | - |
| | | $Sr^{2+}$ | 540 | - | 15 | 1759 | 1681 |
| | | $Ga^{3+}$ | 214 | - | - | - | - |
| | | $F^-$ | - | - | 7 | - | - |

From Tables 1, 2, and 3, in Examples 1 to 5, at least one or more ions eluted differently from other ions regarding whether increased or decreased in acidic versus neutral conditions, indicating acidity (pH) responsiveness (the property that the amount of dissolved ions varies depending on the acidity (pH) of the solution). On the other hand, from Tables 1, 2 and 4, in Comparative Examples 1 to 5, the elution of all ions is greater at neutral than acidic or smaller at neutral than acidic and therefore does not show an acidity (pH) responsiveness.

From these results, it was found that the glass powder composite contains the first glass powder and the second glass powder having different solubility from that of the first glass powder depending on pH, and both the first glass powder and the second glass powder have ion sustained-release, so that the ion sustained-release can be changed according to the changes in acidity.

As described above, the embodiment of the present invention is not limited to a specific embodiment, and various modifications and corrections are possible within the scope of the invention described in the claims.

**Claims**

1.  A glass powder composite comprising:

    a first glass powder; and
    a second glass powder having a different solubility from that of the first glass powder depending on pH,
    wherein both the first glass powder and the second glass powder have ion sustained-release properties.

2.  The glass powder composite according to claim 1, wherein the first glass powder is a powder of silicate glass, and the second glass powder is a powder of phosphate glass.

3.  The glass powder composite according to claim 1 or 2, wherein both the first glass powder and the second glass powder contain at least one element selected from Li, Ca, Sr, Cu, Ag, Zn, B, Ga, and F.

4.  The glass powder composite according to any one of claims 1 to 3, wherein at least one of elements contained in the first glass powder is same as at least one of elements contained in the second glass powder.

5.  The glass powder composite according to any one of claims 1 to 4,

    wherein at least one of elements contained in the first glass powder is different from elements contained in the second glass powder, and
    wherein at least one of the elements contained in the second glass powder is different from the elements contained in the first glass powder.

6.  The glass powder composite according to claim 5, wherein the second glass powder has a higher dissolution rate in a neutral pH region than a dissolution rate in an acidic pH region.

7.  A method of producing a glass powder composite comprising,

    mixing a first glass powder and a second glass powder having a different solubility from that of the first glass powder depending on pH,
    wherein both the first glass powder and the second glass powder have ion sustained-release properties.

Europäisches
Patentamt

European
Patent Office

Office européen
des brevets

**EUROPEAN SEARCH REPORT**

Application Number

EP 22 21 5605

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Issue Volume 4 ET AL: "Journal of Dental and Maxillofacial Research Quantifying the Effect of Adding Alkaline Phosphatase Enzyme to Silicate/Phosphate Glass Mixtures to Enhance Bone Regeneration", J Dent Maxillofacial Res, 1 January 2021 (2021-01-01), pages 1-8, XP093042356, Retrieved from the Internet: URL:https://researchopenworld.com/wp-content/uploads/2021/11/JDMR-4-425.pdf [retrieved on 2023-04-26] * the whole document * | 1-7 | INV. C03C4/00 C03C12/00 C03C3/062 C03C3/066 C03C3/068 C03C3/12 C03C3/16 C03C3/17 |
| X | US 2012/015018 A1 (KOBAYASHI YOSHINAO [JP] ET AL) 19 January 2012 (2012-01-19) * examples * * tables * * claims * | 1-7 | |
| X | GB 1 542 064 A (STANDARD TELEPHONES CABLES LTD) 14 March 1979 (1979-03-14) * the whole document * | 1-7 | TECHNICAL FIELDS SEARCHED (IPC) |
| X | DE 102 14 273 A1 (SCHOTT GLAS [DE]) 23 October 2003 (2003-10-23) * examples * * tables * * claims * * paragraphs [0024], [0025] * | 1-7 | C03C |

The present search report has been drawn up for all claims

| Place of search | Date of completion of the search | Examiner |
|---|---|---|
| Munich | 27 April 2023 | Omegna, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 5605

This annex lists the patent family members relating to the patent documents cited in  the above-mentioned European search report.
The members are as contained in the European Patent Office EDP file on
The European Patent Office is in no way liable for these particulars which are merely given for the purpose of information.

27-04-2023

| Patent document cited in search report | | Publication date | Patent family member(s) | | Publication date |
|---|---|---|---|---|---|
| US 2012015018 | A1 | 19-01-2012 | CN | 102448902 A | 09-05-2012 |
| | | | EP | 2430922 A1 | 21-03-2012 |
| | | | JP | 5131786 B2 | 30-01-2013 |
| | | | JP | 2012007870 A | 12-01-2012 |
| | | | KR | 20110134872 A | 15-12-2011 |
| | | | TW | 201141810 A | 01-12-2011 |
| | | | US | 2012015018 A1 | 19-01-2012 |
| | | | WO | 2011148528 A1 | 01-12-2011 |
| GB 1542064 | A | 14-03-1979 | AU | 515755 B2 | 30-04-1981 |
| | | | BE | 854036 A | 28-10-1977 |
| | | | DK | 185777 A | 30-10-1977 |
| | | | ES | 458231 A1 | 16-02-1978 |
| | | | FR | 2371390 A2 | 16-06-1978 |
| | | | GB | 1542064 A | 14-03-1979 |
| | | | HK | 74979 A | 02-11-1979 |
| | | | IL | 51810 A | 30-06-1980 |
| | | | IT | 1075505 B | 22-04-1985 |
| | | | JP | S5334205 B2 | 19-09-1978 |
| | | | JP | S52133335 A | 08-11-1977 |
| | | | NL | 7704478 A | 01-11-1977 |
| | | | NO | 155442 B | 22-12-1986 |
| | | | ZA | 771949 B | 26-04-1978 |
| DE 10214273 | A1 | 23-10-2003 | NONE | | |

EPO FORM P0459

For more details about this annex : see Official Journal of the European Patent Office, No. 12/82

**EP 4 201 899 A1**

**REFERENCES CITED IN THE DESCRIPTION**

**Patent documents cited in the description**

- JP 2021213324 A
- JP 2000041482 A
- JP 6604499 B
- JP 6622416 B
- JP 2020535881 W
- WO 2019189851 A